# FASCICULE DE BREVET EUROPEEN

(11) **EP 1 452 741 B1**
(45) Date de publication et mention de la délivrance du brevet: **18.04.2007**
(21) Numéro de dépôt: 04290292.4
(22) Date de dépôt: 04.02.2004
(51) Int. Cl.: F04D 29/32, F01D 5/14

(54) **Aube en flèche de turboréacteur**
Gekrümmte Schaufel für Strahltriebwerk
Curved blade for gas turbine engine

(30) Priorité: 27.02.2003 FR 0302380
(43) Date de publication de la demande: 01.09.2004
(73) Titulaire: SNECMA, 75015 Paris (FR)
(72) Inventeur: Talbotec, Jérôme, 77380 Combs-La-Ville (FR); Fessou, Philippe, 77000 Melun (FR); Joly, Herbert, 91400 Saclay (FR); Bois, Béatrice, 77166 Evry-Gregy-sur-Yerres (FR)
(74) Mandataire: Thévenet, Jean-Bruno

(56) Documents cités:
- EP-A- 0 774 567
- EP-A- 0 801 230
- EP-A- 1 106 836
- EP-A- 1 126 133

## Description

### Arrière-plan de l'invention

La présente invention se rapporte au domaine général des aubes en flèche de turboréacteur. Elle vise plus particulièrement la géométrie des aubes de la soufflante ou des compresseurs d'un turboréacteur.

Un turboréacteur est notamment muni d'une soufflante suivie, dans le sens d'écoulement gazeux traversant le turboréacteur, d'un compresseur multi-étages. La soufflante et le compresseur sont des éléments du turboréacteur traversés par le flux gazeux. Ils se composent chacun d'une rangée d'aubes mobiles circonférentiellement espacées les unes des autres de façon à définir des passages pour le flux gazeux. Les aubes de ces éléments sont soumises à des vitesses de rotation qui peuvent engendrer des vitesses subsoniques à supersoniques pour l'écoulement gazeux traversant ces éléments du turboréacteur. Bien que des vitesses d'écoulement élevées permettent notamment d'améliorer le débit du flux gazeux pour augmenter la poussée du turboréacteur, elles présentent toutefois l'inconvénient d'engendrer un bruit important. En particulier, le « choc supersonique » correspondant au passage de vitesses supersoniques à des vitesses subsoniques pour le flux gazeux contribue pour une part importante à ce bruit. D'autres phénomènes d'interaction mettant en cause la turbulence de l'écoulement gazeux à proximité de la soufflante (bruit à large bande) sont également des sources de bruit de la soufflante.

Les motoristes cherchent donc à élaborer des aubes de soufflante et de compresseur qui permettent d'augmenter la poussée du turboréacteur tout en minimisant le bruit engendré par l'écoulement gazeux qui les traverse. De plus, lors de l'élaboration de ces aubes, plusieurs autres paramètres doivent être pris en compte comme l'aérodynamique et la mécanique de ces aubes. En effet, les aubes doivent être dessinées de façon à optimiser le débit et la compression du flux gazeux les traversant tout en leur garantissant une bonne tenue mécanique. En particulier, aux vitesses de rotation élevées, les contraintes mécaniques subies par les aubes sont des plus sévères en raison du niveau élevé des vibrations et de la force centrifuge qui s'appliquent aux aubes.

De nombreuses géométries d'aubes de soufflante et de compresseurs ont été proposées. Elles se caractérisent principalement par leurs lois d'empilages de sections d'aube, leur courbure générale et la présence éventuelle de flèches aérodynamiques afin d'améliorer les performances aérodynamiques et de diminuer le bruit engendré par la soufflante et les compresseurs du turboréacteur. On se réfère par exemple au document EP 0 774 567 A1. Cependant, aucune de ces aubes ne permet d'obtenir un fonctionnement aérodynamique efficace dans toutes les conditions d'utilisation du turboréacteur, notamment à haut régime (par exemple pendant le décollage et la fin de montée de l'avion) et à régime partiel (par exemple pendant la phase d'approche de l'avion), tout en respectant les normes de bruit qui sont de plus en plus contraignantes.

### Objet et résumé de l'invention

La présente invention vise donc à pallier de tels inconvénients en proposant une nouvelle géométrie d'aube de soufflante ou de compresseur de turboréacteur qui permet de garantir un fonctionnement aérodynamique optimal dans toutes les conditions de fonctionnement du turboréacteur tout en minimisant le bruit engendré. Elle vise également une soufflante et un compresseur de turboréacteur comportant une pluralité de ces aubes.

A cet effet, il est prévu une aube rotative de turboréacteur telle que définie par la revendication 1.

La combinaison d'un « ventre haut » (défini comme étant le point du bord d'attaque de position longitudinale minimum et donc situé au niveau de la limite inférieure de la partie intermédiaire du bord d'attaque) et d'une flèche arrière déportée dans les directions axiale et tangentielle (en sens inverse de rotation de l'aube) se traduit par une meilleure répartition radiale du débit gazeux traversant l'aube, ce qui permet d'augmenter la capacité de débit à haut régime et de gagner du rendement à régime partiel. Il résulte de ces gains de rendement ainsi que de ces réductions d'incidence une amélioration des caractéristiques acoustiques. De la sorte, une telle géométrie d'aube bénéficie, à faible régime, du faible niveau acoustique d'une aube droite, associé à des rendements élevés et, à haut régime, des performances élevées en terme de capacité de débit et de rendement d'une aube en flèche.

La position du ventre se situe avantageusement entre 40% et 75% de la hauteur radiale de l'aube entre son pied et son sommet.

De préférence, l'inclinaison longitudinale de la ligne du bord d'attaque de la partie inférieure est comprise entre -5° et 15° par rapport à l'axe radial du turboréacteur. Cette limitation de l'angle de raccord entre le pied de l'aube et la veine intérieure d'écoulement du flux gazeux permet de limiter les contraintes mécaniques qui s'exercent sur l'aube. De plus, la partie inférieure de l'aube peut également comporter une inclinaison tangentielle de la ligne des centres de gravité des sections d'aube. Avantageusement, cette inclinaison tangentielle est comprise entre -5° et 15° par rapport à l'axe radial du turboréacteur.

De même, l'inclinaison longitudinale vers l'arrière de la ligne du bord d'attaque de la partie intermédiaire est de préférence comprise entre 5° et 20° par rapport à l'axe radial du turboréacteur. La partie intermédiaire de l'aube peut en outre comporter une inclinaison tangentielle de la ligne des centres de gravité des sections d'aube. Avantageusement, cette inclinaison tangentielle est comprise entre -5° et 15° par rapport à l'axe radial du turboréacteur.

De préférence, l'inclinaison longitudinale vers l'arrière de la ligne du bord d'attaque de la partie supérieure est comprise entre 20° et 50° et l'inclinaison tangentielle de la ligne des centres de gravité des sections d'aube dans le sens inverse de rotation de cette même partie supérieure est comprise entre 20° et 50° par rapport à l'axe radial du turboréacteur.

Selon une variante de l'invention, la partie supérieure du bord d'attaque comporte en outre une zone supérieure s'étendant radialement jusqu'au sommet d'aube et dont la ligne du bord d'attaque présente une inclinaison longitudinale vers l'avant. Ce basculement vers l'avant de la zone supérieure de la partie supérieure de l'aube permet d'équilibrer mécaniquement l'aube sans pour autant affecter son rendement.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale et partielle d'une soufflante de turboréacteur munie d'aubes selon un mode de réalisation de l'invention ;
- la figure 2 est une vue en coupe selon II-II de la figure 1 ; et
- les figures 3A et 3B sont des vues respectivement en coupe longitudinale et transversale de l'aube de la figure 1 représentée de façon schématique avec, en pointillés, le profil schématique d'une aube de l'art antérieur.

### Description détaillée d'un mode de réalisation

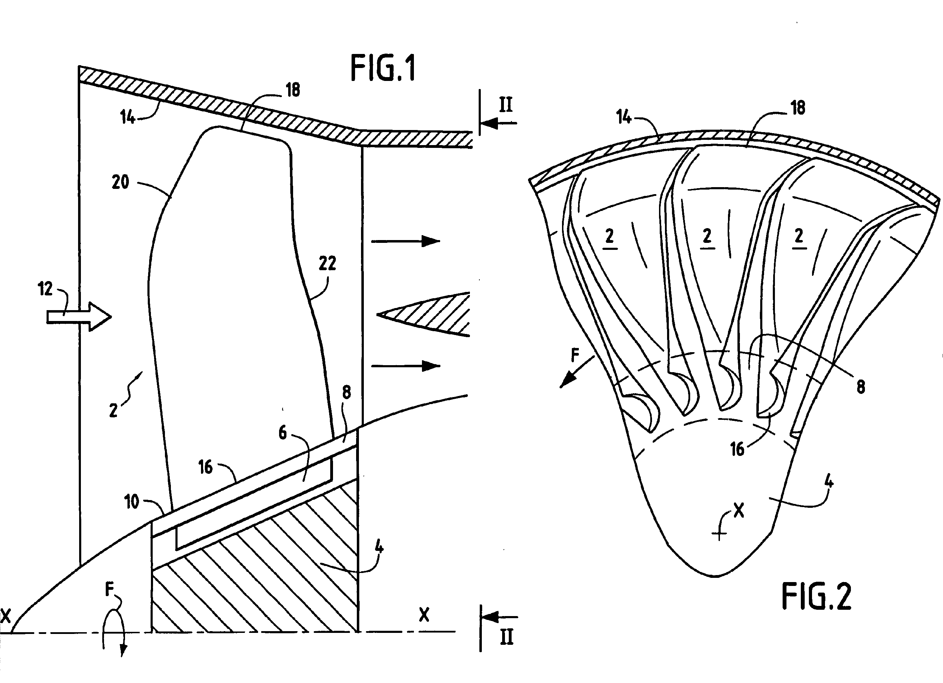

Les figures 1 et 2 illustrent partiellement de façon schématique en coupes longitudinale et transversale une soufflante de turboréacteur munie d'aubes selon un mode de réalisation de l'invention. Sur ces figures, la soufflante comporte une rangée d'aubes 2 régulièrement espacées les unes des autres autour d'un disque ou moyeu 4. Chaque aube 2 est fixée par un emmanchement 6 au disque ou moyeu 4 qui tourne autour d'un axe longitudinal X-X du turboréacteur dans le sens de rotation indiqué par la flèche F. Chaque aube 2 comporte également une plate-forme 8 qui s'étend partiellement autour de l'axe longitudinal X-X. Lorsque les aubes sont assemblées sur le disque ou moyeu 4, les plates-formes 8 d'aubes adjacentes se retrouvent en contact mutuel afin de définir une paroi interne 10 d'une veine d'écoulement du flux d'air 12 traversant la soufflante. Une paroi 14 d'un carter entourant la soufflante forme la paroi externe de la veine d'écoulement du flux d'air.

On définit, pour la suite de la description, l'axe radial Z-Z du turboréacteur comme étant l'axe perpendiculaire à l'axe longitudinal X-X et passant par le centre de gravité de la coupe résultant de l'intersection de l'aube avec la paroi interne de la veine d'écoulement du flux d'air. Un axe tangentiel Y-Y forme un trièdre orthonormé direct avec les axes longitudinal X-X et radial Z-Z du turboréacteur.

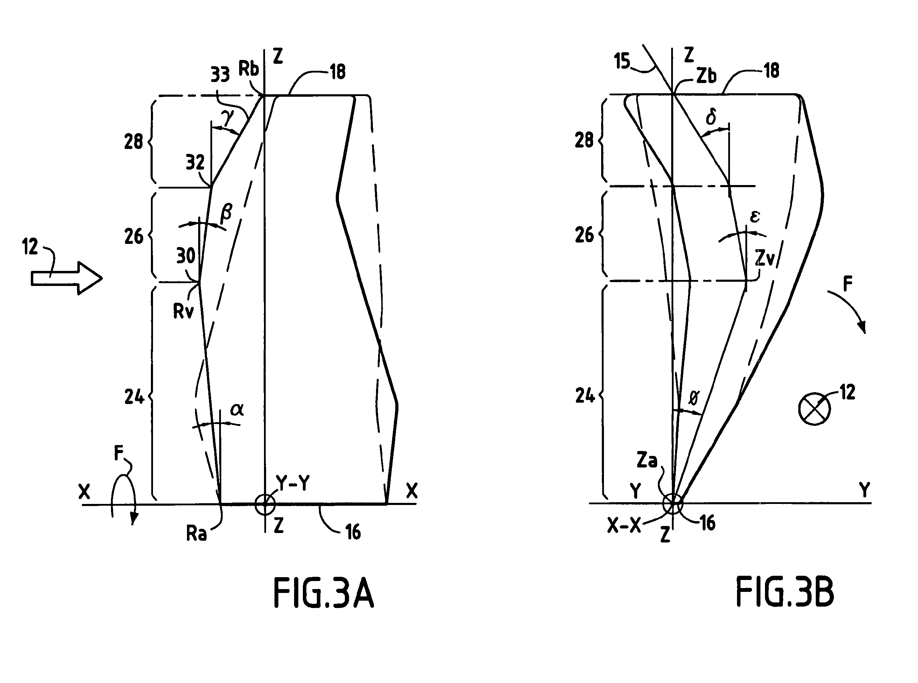

L'aube 2 illustrée sur les figures comporte une pluralité de sections d'aube (non représentées) qui résultent d'un découpage de l'aube par des plans à altitude constante et perpendiculaires à l'axe radial Z-Z. Ces sections s'étendent depuis la plate-forme 8 selon une ligne 15 des centres de gravité des sections d'aube. La ligne 15 des centres de gravité des sections d'aube est obtenue par projection des centres de gravité de chaque section d'aube dans le plan défini par les axes tangentiel Y-Y et radial Z-Z. Comme illustré sur la figure 3B, cette ligne des centres de gravité des sections d'aube est fonction de la hauteur selon l'axe radial Z-Z des centres de gravité des sections d'aube. La ligne des centres de gravité des sections d'aube s'étend donc entre un point de hauteur minimum Za et un point de hauteur maximum Zb. Le point Za appartient à l'intersection entre l'aube et la paroi interne de la veine d'écoulement du flux d'air et son altitude correspond à une moyenne des altitudes des points du bord d'attaque et du bord de fuite de l'aube sur cette même intersection. Le point Zb correspond à l'altitude de la dernière section d'aube entièrement comprise dans la veine d'écoulement du flux d'air.

L'aube est en outre délimitée radialement entre un pied 16 et un sommet d'aube 18, et longitudinalement entre un bord d'attaque 20 et un bord de fuite 22. L'aube 2 est par ailleurs vrillée à partir de son pied 16 jusqu'à son sommet 18 afin de coopérer avec le flux d'air 12 traversant la soufflante lors de son fonctionnement. En se référant plus spécifiquement aux figures 3A et 3B, on remarque que l'aube peut être décomposée de façon schématique en une partie inférieure 24, une partie intermédiaire 26 et une partie supérieure 28. La partie inférieure 24 s'étend le long d'un axe radial Z-Z du turboréacteur depuis le pied d'aube 16 jusqu'à une limite inférieure 30 de la partie intermédiaire 26 et la partie supérieure 28 s'étend radialement depuis une limite supérieure 32 de la partie intermédiaire 26 jusqu'au sommet d'aube 18.

Selon l'invention, une ligne 33 du bord d'attaque 20 de l'aube présente une inclinaison longitudinale α vers l'avant ou l'arrière au niveau de la partie inférieure 24 de l'aube et une inclinaison longitudinale β vers l'arrière au niveau de la partie intermédiaire 26 de l'aube. De plus, la partie supérieure 28 de l'aube présente une inclinaison longitudinale γ vers l'arrière de la ligne 33 de son bord d'attaque et une inclinaison tangentielle δ dans le sens inverse de rotation de l'aube de la ligne 15 des centres de gravité des sections d'aube.

La ligne 33 du bord d'attaque de l'aube est définie comme étant la projection à rayon constant des points du bord d'attaque 20 de l'aube dans un plan méridien défini par les axes longitudinal X-X et radial Z-Z et illustré par la figure 3A. Cette ligne 33 du bord d'attaque est donc fonction du rayon des points du bord d'attaque. Le rayon des points du bord d'attaque est défini entre un point de rayon minimum Ra qui correspond à l'intersection du bord d'attaque 20 de l'aube avec la paroi interne de la veine d'écoulement du flux d'air et un point de rayon maximum Rb correspondant à l'intersection entre le bord d'attaque et la paroi externe de la veine d'écoulement.

Par inclinaison longitudinale « vers l'avant » de la ligne 33 du bord d'attaque, il faut comprendre que la ligne du bord d'attaque 20 de l'aube est inclinée vers l'avant de la soufflante, c'est à dire vers l'entrée du flux d'air 12 traversant celle-ci. De même, par inclinaison longitudinale « vers l'arrière », on entend que la ligne du bord d'attaque est inclinée vers l'arrière de la soufflante, c'est à dire dans le sens d'écoulement du flux d'air 12 la traversant. De plus, par inclinaison « tangentielle dans le sens inverse de rotation de l'aube », il faut comprendre que la ligne 15 des centres de gravité des sections d'aube est inclinée selon l'axe tangentiel Y-Y. Cette inclinaison tangentielle δ est réalisée dans une direction inverse au sens de rotation F de la soufflante. Les inclinaisons α, β, γ et δ sont toutes définies par rapport à l'axe radial Z-Z du turboréacteur.

Avec cette configuration, le bord d'attaque de l'aube selon l'invention présente un point d'abscisse longitudinale minimum, également appelé « ventre », situé au niveau de la limite inférieure 30 de sa partie intermédiaire 26. L'abscisse selon l'axe longitudinal X-X du turboréacteur se définit dans la direction d'écoulement du flux d'air 12. Le bord d'attaque de l'aube selon l'invention présente également une flèche arrière associée à un déport tangentiel des sections d'aube dans le sens inverse de rotation de la soufflante. Les figures 2 et 3B illustrent bien cette flèche arrière associée à son déport tangentiel.

Selon une caractéristique avantageuse de l'invention, le point d'abscisse longitudinale minimum Rv ou ventre est situé entre 40% et 75% de la hauteur radiale totale de l'aube. Cette hauteur radiale est mesurée du pied 16 vers le sommet 18 de l'aube. Par définition, une hauteur radiale minimum de 0% correspond au point d'intersection Ra entre le bord d'attaque et la paroi interne de la veine d'écoulement du flux d'air et une hauteur radiale maximum de 100% correspond au point d'intersection Rb entre le bord d'attaque et la paroi externe de la veine d'écoulement. En comparaison, une aube de l'art antérieur est représentée en pointillés sur les figures 3A et 3B. Sur la figure 3A, on remarque notamment que le bord d'attaque de cette aube présente également un point d'abscisse longitudinale minimum. Toutefois, ce point d'abscisse minimum est situé nettement plus bas que celui de l'aube de la présente invention (à une hauteur radiale de l'ordre de 30% environ).

De plus, on remarquera que la limite entre la partie intermédiaire 26 et la partie supérieure 28 de l'aube se calcule, d'une part, pour la ligne 33 du bord d'attaque en divisant le segment reliant les points Rv et Rb en deux parties égales, et d'autre part, pour la ligne des centres de gravité des sections d'aube 15, en divisant le segment reliant les points Zv (dont l'altitude est identique à celle du point Rv) et Zb également en deux parties égales.

Selon une autre caractéristique avantageuse de l'invention, l'inclinaison longitudinale a de la ligne 33 du bord d'attaque de la partie inférieure 24 de l'aube est comprise entre -5° et 15°. On notera que lorsque cette inclinaison est négative, elle correspond à une inclinaison vers l'arrière de la ligne du bord d'attaque, tandis que lorsqu'elle est positive, elle correspond à une inclinaison vers l'avant. Cette configuration permet de limiter l'angle de raccord entre le pied 16 de l'aube et la veine intérieure d'écoulement du flux d'air. Les contraintes mécaniques s'exerçant sur l'aube au niveau de sa partie inférieure sont donc moins importantes que pour une aube de l'art antérieur pour laquelle l'angle de raccord est plus élevé. En outre, l'inclinaison longitudinale β vers l'arrière de la ligne 33 du bord d'attaque de la partie intermédiaire 26 de l'aube est de préférence comprise entre 5° et 20°.

Selon encore une autre caractéristique avantageuse de l'invention, la partie supérieure 28 de l'aube présente une inclinaison longitudinale γ (figure 3A) vers l'arrière de la ligne du bord d'attaque comprise entre 20° et 50° et une inclinaison tangentielle δ dans le sens inverse de rotation de l'aube (figure 3B) de la ligne 15 des centres de gravité des sections d'aube comprise entre 20° et 50° par rapport à l'axe radial Z-Z du turboréacteur.

Selon encore une caractéristique avantageuse de l'invention, la partie inférieure 24 de l'aube peut également comporter une inclinaison tangentielle Φ de la ligne 15 des centres de gravité des sections d'aube. Cette inclinaison tangentielle Φ est de préférence comprise entre -5° et 15° par rapport à l'axe radial Z-Z du turboréacteur. Lorsqu'elle est négative, cette inclinaison Φ s'effectue dans le sens inverse de rotation de l'aube, et lorsqu'elle est positive, elle s'effectue dans le sens de rotation de l'aube.

En outre, la partie intermédiaire 26 de l'aube peut également comporter une inclinaison tangentielle ε de la ligne 15 des centres de gravité des sections d'aube. Cette inclinaison tangentielle ε est de préférence comprise entre -5° et 15° par rapport à l'axe radial Z-Z du turboréacteur. Lorsqu'elle est négative, cette inclinaison ε s'effectue dans le sens de rotation de l'aube, et lorsqu'elle est positive, elle s'effectue dans le sens inverse de rotation de l'aube.

Toutes ces inclinaisons α, β, γ, δ, Φ et ε correspondent à une flèche arrière fortement prononcée dans les directions longitudinale et tangentielle. La combinaison de cette flèche arrière à la présence d'un ventre haut permettent notamment de fortement réduire l'angle d'incidence des profils de l'aube. Cette forte réduction de l'angle d'incidence se traduit, au niveau de la partie supérieure 28 de l'aube, notamment par un gain substantiel de rendement à régime partiel permettant d'améliorer le bruit à large bande généré par l'écoulement de l'air traversant la soufflante. De plus, la répartition radiale du débit d'air traversant la soufflante obtenue par l'aube selon la présente invention permet d'accentuer le passage du débit d'air dans la partie supérieure de l'aube.

Si nécessaire, il peut être prévu, selon une variante de l'invention, de former un basculement vers l'avant des sections de tête de l'aube (non représenté sur les figures) afin d'améliorer le comportement mécanique de l'aube. Les sections de tête de l'aube sont situées dans une zone supérieure de la partie supérieure 28 de l'aube comprise entre 80% et 100% de sa hauteur radiale. Un basculement vers l'avant de ces sections de tête correspond donc à une inclinaison longitudinale vers l'avant de la ligne du bord d'attaque de cette zone. Par exemple, cette inclinaison peut être comprise entre 5° et 20°. Le basculement local de ces sections de tête a pour avantage d'équilibrer l'aube en limitant les écarts entre les centres de gravité des sections de l'aube sans pour autant affecter les performances aéro-acoustiques de la géométrie de l'aube.

L'aube telle que précédemment décrite fait partie de la soufflante du turboréacteur. Bien entendu, la présente invention s'applique également aux aubes de compresseurs haute et basse pression du turboréacteur. En outre, on remarquera que les autres caractéristiques géométriques de l'aube (corde, épaisseur, profil du bord de fuite, cambrure de l'aube, etc.) n'ont pas été décrites car elles ne font l'objet de la présente invention.

## Revendications

1. Aube rotative de turboréacteur destinée à être soumise à un flux gazeux longitudinal, ladite aube (2) comprenant une pluralité de sections d'aube s'étendant le long d'une ligne des centres de gravité desdites sections d'aube (15) entre un pied (16) et un sommet (18) de ladite aube, ladite aube étant délimitée longitudinalement entre un bord d'attaque (20) et un bord de fuite (22), ladite aube présentant, selon un axe radial (Z-Z), une partie inférieure (24), une partie intermédiaire (26) et une partie supérieure (28), ladite partie inférieure s'étendant radialement depuis ledit pied d'aube (16) jusqu'à une limite inférieure (30) de ladite partie intermédiaire et ladite partie supérieure s'étendant radialement depuis une limite supérieure (32) de ladite partie intermédiaire jusqu'audit sommet d'aube (18), ladite partie inférieure (24) présentant une première inclinaison longitudinale (α) d'une ligne (33) du bord d'attaque, ladite partie intermédiaire (26) présentant une deuxième inclinaison longitudinale (β) vers le bord de fuite (22) de l'aube de ladite ligne du bord d'attaque et ladite partie supérieure (26) présentant une troisième inclinaison longitudinale (γ) vers le bord de fuite de l'aube de ladite ligne du bord d'attaque, **caractérisée en ce que** la partie supérieure (26) de l'aube présente en outre une inclinaison tangentielle (δ) vers l'extrados de l'aube de ladite ligne des centres de gravité des sections d'aube (15).

2. Aube selon la revendication 1, **caractérisée en ce que** ladite limite inférieure (30) de la partie intermédiaire (26) de l'aube se situe entre 40% et 75% de la hauteur radiale de ladite aube entre son pied (16) et son sommet (18).

3. Aube selon l'une des revendications 1 et 2, **caractérisée en ce que** la première inclinaison longitudinale (α) de la ligne du bord d'attaque de ladite partie inférieure (24) est comprise entre -5° et 15° par rapport audit axe radial (Z-Z).

4. Aube selon l'une quelconque des revendications 1 à 3, **caractérisée en ce que** la deuxième inclinaison longitudinale (β) vers l'arrière de la ligne du bord d'attaque de ladite partie intermédiaire (26) est comprise entre 5° et 20° par rapport audit axe radial (Z-Z).

5. Aube selon l'une quelconque des revendications 1 à 4, **caractérisée en ce que** la troisième inclinaison longitudinale (γ) vers l'arrière de la ligne du bord d'attaque de ladite partie supérieure (28) est comprise entre 20° et 50° et l'inclinaison tangentielle (δ) de la ligne des centres de gravité des sections d'aube (15) de ladite partie supérieure (28) est comprise entre 20° et 50° par rapport audit axe radial (Z-Z).

6. Aube selon l'une quelconque des revendications 1 à 5, **caractérisée en ce que** ladite partie inférieure (24) présente en outre une inclinaison tangentielle (φ) de la ligne des centres de gravité des sections d'aube (15) comprise entre -5° et 15° par rapport audit axe radial (Z-Z).

7. Aube selon l'une quelconque des revendications 1 à 6, **caractérisée en ce que** ladite partie intermédiaire (26) présente en outre une inclinaison tangentielle (ε) de la ligne des centres de gravité des sections d'aube (15) comprise entre -5° et 15° par rapport audit axe radial (Z-Z).

8. Aube selon l'une quelconque des revendications 1 à 7, **caractérisée en ce que** ladite partie supérieure (28) comporte en outre une zone supérieure s'étendant radialement jusqu'audit sommet d'aube (18) dont la ligne (33) du bord d'attaque présente une inclinaison longitudinale vers le bord d'attaque (20) de l'aube.

9. Machine rotative de turboréacteur traversée par un écoulement gazeux, **caractérisée en ce qu**'elle comporte une pluralité d'aubes selon l'une quelconque des revendications 1 à 8.

10. Machine selon la revendication 9, **caractérisée en ce qu'**elle constitue une soufflante de turboréacteur.

11. Machine selon la revendication 9, **caractérisée en ce qu'**elle constitue un compresseur de turboréacteur.

## Claims

1. A rotary turbojet blade that is to be subjected to a longitudinal gas flow, said blade (2) comprising a plurality of blade sections extending along a line (15) of the centres of gravity of said blade sections between a base (16) and a tip (18) of said blade, said blade being defined longitudinally between a leading edge (20) and a trailing edge (22), said blade presenting along a radial axis (Z-Z), a bottom portion (24), an intermediate portion (26), and a top portion (28), said bottom portion extending radially from said blade base (16) to a bottom limit (30) of said intermediate portion, and said top portion extending radially from a top limit (32) of said intermediate portion to said blade tip (18), said bottom portion (24) presenting a first longitudinal angle of inclination (α) for a leading edge line (33), said intermediate portion (26) presenting a second longitudinal angle of inclination (β) towards the trailing edge (22) of the blade for said leading edge line, and said top portion (28) presenting a third longitudinal angle of inclination (γ) towards the trailing edge of the blade for said leading edge line, the blade being **characterised in that** the top portion (28) of the blade further presents a tangential angle of inclination (δ) towards the upper surface of the blade for said line (15) of the centres of gravity of the blade sections.

2. A blade according to claim 1, **characterised in that** said bottom limit (30) of the intermediate portion (26) of the blade lies in the range 40% to 75% of the radial height of said blade between its base (16) and its tip (18).

3. A blade according to claim 1 or claim 2, **characterised in that** the first longitudinal angle of inclination (α) of the leading edge line of said bottom portion (24) lies in the range -5° to 15° relative to said radial axis (Z-Z).

4. A blade according to any one of claims 1 to 3, **characterised in that** the second backward longitudinal angle of inclination (β) of the leading edge line of said intermediate portion (26) lies in the range 5° to 20° relative to said radial axis (Z-Z).

5. A blade according to any one of claims 1 to 4, **characterised in that** the third backward longitudinal angle of inclination (γ) of the leading edge line of said top portion (28) lies in the range 20° to 50°, and the tangential angle of inclination (δ) of the line (15) of the centres of gravity of the blade sections of said top portion (28) lies in the range 20° to 50° relative to said radial axis (Z-Z).

6. A blade according to any one of claims 1 to 5, **characterised in that** said bottom portion (24) further presents a tangential angle of inclination (φ) for the line (15) of the centres of gravity of the blade sections lying in the range -5° to 15° relative to said radial axis (Z-Z).

7. A blade according to any one of claims 1 to 6, **characterised in that** said intermediate portion (26) further presents a tangential angle of inclination (ε) for the line (15) of the centres of gravity of the blade sections lying in the range -5° to 15° relative to said radial axis (Z-Z).

8. A blade according to any one of claims 1 to 7, **characterised in that** said top portion (28) further comprises a top zone extending radially to said blade tip (18) in which the leading edge line (33) presents a longitudinal angle of inclination towards the leading edge (20) of the blade.

9. A rotary turbojet machine for passing a flow of gas, **characterised in that** it includes a plurality of blades according to any one of claims 1 to 8.

10. A machine according to claim 9, **characterised in that** it constitutes a turbojet fan.

11. A machine according to claim 9, **characterised in that** it constitutes a turbojet compressor.

## Patentansprüche

1. Umlaufende Turbostrahltriebwerksschaufel, welche dazu bestimmt ist, einem Gaslängsstrom unterworfen zu werden, wobei die Schaufel (2) eine Vielzahl von Schaufelabschnitten umfaßt, die sich entlang einer Linie der Schwerpunkte der Schaufelabschnitte (15) zwischen einem Fuß (16) und einer Spitze (18) der Schaufel erstrecken, wobei die Schaufel in Längsrichtung zwischen einer Eintrittskante (20) und einer Austrittskante (22) begrenzt ist, wobei die Schaufel entlang einer radialen Achse (Z-Z) einen unteren Teil (24), einen Zwischenteil (26) und einen oberen Teil (28) aufweist, wobei der untere Teil sich radial von dem Schaufelfuß (16) bis zu einer unteren Grenze (30) des Zwischenteils erstreckt und der obere Teil sich radial von einer oberen Grenze (32) des Zwischenteils bis zur Schaufelspitze (18) erstreckt, wobei der untere Teil (24) eine erste Längsneigung (a) einer Linie (33) der Eintrittskante aufweist, wobei der Zwischenteil (26) eine zweite Längsneigung (β) der genannten Linie der Eintrittskante zur Austrittskante (22) der Schaufel aufweist und wobei der obere Teil (28) eine dritte Längsneigung (γ) der genannten Linie der Eintrittskante zur Austrittskante der Schaufel aufweist, **dadurch gekennzeichnet, daß** der obere Teil (28) der Schaufel ferner eine Tangentialneigung (δ) der Linie der Schwerpunkte der Schaufelabschnitte (15) zur Oberseite der Schaufel aufweist.

2. Schaufel nach Anspruch 1, **dadurch gekennzeichnet, daß** die untere Grenze (30) des Zwischenteils (26) der Schaufel zwischen 40 % und 75 % der radialen Höhe der Schaufel zwischen ihrem Fuß (16) und ihrer Spitze (18) liegt.

3. Schaufel nach einem der Ansprüche 1 und 2, **dadurch gekennzeichnet, daß** die erste Längsneigung (a) der Linie der Eintrittskante des unteren Teils (24) zwischen -5° und 15° gegenüber der radialen Achse (Z-Z) beträgt.

4. Schaufel nach irgendeinem der Ansprüche 1 bis 3, **dadurch gekennzeichnet, daß** die zweite Längsneigung (β) nach hinten der Linie der Eintrittskante des Zwischenteils (26) zwischen 5° und 20° gegenüber der radialen Achse (Z-Z) beträgt.

5. Schaufel nach irgendeinem der Ansprüche 1 bis 4, **dadurch gekennzeichnet, daß** die dritte Längsneigung (γ) nach hinten der Linie der Eintrittskante des oberen Teils (28) zwischen 20° und 50° beträgt und die Tangentialneigung (*δ*) der Linie der Schwerpunkte der Schaufelabschnitte (15) des oberen Teils (28) zwischen 20° und 50° gegenüber der radialen Achse (Z-Z) beträgt.

6. Schaufel nach irgendeinem der Ansprüche 1 bis 5, **dadurch gekennzeichnet, daß** der untere Teil (24) ferner eine Tangentialneigung (φ) der Linie der Schwerpunkte der Schaufelabschnitte (15) zwischen -5° und 15° gegenüber der radialen Achse (Z-Z) aufweist.

7. Schaufel nach irgendeinem der Ansprüche 1 bis 6, **dadurch gekennzeichnet, daß** der Zwischenteil (26) ferner eine Tangentialneigung (ε) der Linie der Schwerpunkte der Schaufelabschnitte (15) zwischen -5° und 15° gegenüber der radialen Achse (Z-Z) aufweist.

8. Schaufel nach irgendeinem der Ansprüche 1 bis 7, **dadurch gekennzeichnet, daß** der obere Teil (28) außerdem einen sich radial bis zur Schaufelspitze (18) erstreckenden oberen Bereich umfaßt, dessen Linie (33) der Eintrittskante eine Längsneigung zur Eintrittskante (20) der Schaufel aufweist.

9. Umlaufende Maschine eines Turbostrahltriebwerks, die von einem Gasstrom durchströmt wird, **dadurch gekennzeichnet, daß** sie eine Vielzahl von Schaufeln nach irgendeinem der Ansprüche 1 bis 8 umfaßt.

10. Maschine nach Anspruch 9, **dadurch gekennzeichnet, daß** sie ein Turbostrahltriebwerksgebläse bildet.

11. Maschine nach Anspruch 9, **dadurch gekennzeichnet, daß** sie einen Turbostrahltriebwerksverdichter bildet.
